Europäisches Patentamt

(19) European Patent Office

Office européen des brevets

(11) Veröffentlichungsnummer: **0 022 069**
**B1**

# (12) EUROPÄISCHE PATENTSCHRIFT

(45) Veröffentlichungstag der Patentschrift:
21.09.83

(51) Int. Cl.³: **H 04 L 9/04, H 04 K 1/02**

(21) Anmeldenummer: **80810184.4**

(22) Anmeldetag: **02.06.80**

(54) **Vorrichtung zur chiffrierten Übermittlung von Nachrichten.**

(30) Priorität: **08.06.79 CH 5368/79**

(43) Veröffentlichungstag der Anmeldung:
**07.01.81 Patentblatt 81/1**

(45) Bekanntmachung des Hinweises auf die Patenterteilung:
**21.09.83 Patentblatt 83/38**

(84) Benannte Vertragsstaaten:
**AT CH DE FR GB IT LI SE**

(56) Entgegenhaltungen:
**DE-A-2 218 447**
**DE-B-1 207 426**
**DE-B-2 231 849**
**DE-C-978 059**
**DE-C-1 098 993**
**FR-A-2 232 038**
**US-A-3 651 261**

(73) Patentinhaber: **GRETAG Aktiengesellschaft,
Althardstrasse 70, CH-8105 Regensdorf (CH)**

(72) Erfinder: **Ehrat, Kurt, Grebweg 17, CH-8162 Steinmaur
(CH)**

(74) Vertreter: **Pirner, Wilhelm et al, Patentabteilung der
CIBA-GEIGY AG Postfach, CH-4002 Basel (CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Vorrichtung zur chiffrierten Übermittlung von Nachrichten

Die Erfindung betrifft eine Vorrichtung zur chiffrierten Übermittlung von Nachrichten gemäss dem Oberbegriff des Patentanspruchs 1.

Für Systeme zur chiffrierten, Nachrichtenübertragung sind Chiffrierschlüsseleinrichtungen, deren Organisation und deren Handhabung von wesentlicher Bedeutung für die Geheimhaltung der zu übermittelnden Nachrichten. Die bisher bekanntgewordenen Chiffriersysteme sind alle mit gewissen Mängeln und Unzulänglichkeiten behaftet, welche im folgenden anhand der drei wichtigsten Chiffriersysteme, auf die sich praktisch alle bedeutenderen bisher bekannten Systeme zurückführen lassen, erläutert werden.

Ein erstes dieser drei Grund-Chiffriersysteme ist beispielsweise in der DE-A-2 218 447 beschrieben und arbeitet mit einem Chiffriergenerator, der eine mit dem Text zu mischende Chiffriersequenz in Abhängigkeit von drei verschiedenen Schlüsseln erzeugt. Diese Schlüssel sind ein geheimer Grundschlüssel, ein ebenso geheimer Strukturschlüssel und ein nichtgeheimer Zusatzschlüssel. Der Grundschlüssel wird in der Regen von der Bedienungsperson direkt oder gemäss z.B. DE-C-978 059 mittels steckbarer Speichermodulen in das Gerät eingegeben. Dasselbe gilt für den Sturukturschlüssel. Der Zusatzschlüssel wird in der Regel bei jeder Verbindungsaufnahme neu erzeugt und im Klartext übertragen.

Bei diesem bekannten System birgt die Notwendigkeit der Handhabung der Geheimschlüssel durch Bedienungspersonal die Gefahr, dass Geheimschlüssel durch Verrat oder Erpressung an Unbefugte gelangen. Ausserdem sind Fehlmanipulationen kaum zu vermeiden. In einem Verbindungsnetz gelangen ferner normalerweise die gleichen geheimen Grundschlüssel zur Anwendung, so dass, wenn der Grundschlüssel bei einem Teilnehmer verraten ist, das ganze Netz mit verraten ist. Ferner muss bei jeder Verbindungsaufnahme eine neue Synchronisation stattfinden. Ausserdem muss der Zusatzschlüssel bei jeder Verbindungsaufnahme übertragen werden, und zwar fehlerfrei. Ferner müssen die Geheimschlüsselunterlagen permanent überwacht werden und die Organisation der Geheimschlüsselverteilung ist insbesondere bei weit entfernten Netzteilnehmern schwierig. Häufige Geheimschlüsselausgabe bringt grosse Umtriebe, weniger häufige Ausgabe anderseits birgt die Gefahr der mangelnden Chiffriersicherheit (Mehrfachverwendung desselben Grundschlüssels) und des Geheimschlüsselverrats in sich.

Das zweite der drei Grundsysteme ist das sogenannte «Random-Tape»- oder «One-Time-Tape«-System, welches ohne Chiffriergenerator arbeitet. Jeder der Teilnehmer eines Nachrichtennetzes ist mit der gleichen Lochstreifen-Rolle ausgerüstet, welche eine Zufallsinformation enthält, mit welcher die Nachrichten direkt, d.h. Bit für Bit chiffriert werden. Jedem Nachrichtenbit ist ein Bit der Zufallsinformation zugeordnet und jedes Bit der letzteren wird nur einmal verwendet. Die auf diese Weise chiffrierte Nachricht ist somit ohne Kenntnis der Zufallsinformation absolut dechiffriersicher.

Die Nachteile dieses Systems liegen auf der Hand: Wegen der direkten Verschlüsselung werden enorme Mengen an Zufallsinformation benötigt, was insbesondere bei grösseren Netzen zu Nachschubproblemen führt. Die sichere Überbringung und die Verteilung dieser grossen Zufallsinformationsmengen ist problematisch. Ausserdem bestehen besonders in Mehrfachnetzen schwierige Synchronisationsprobleme. Dieses System hat sich daher in der Praxis nicht breit durchsetzen können.

Das dritte System arbeitet wie das erste mit einer Art Chiffriergenerator. Dieser wird durch einen geheimen Chiffrierschlüssel analog dem ersten System und zusätzlich noch durch eine sogenannte Ursteuerimpulsfolge gesteuert, die allen Teilnehmern eines Verbindungsnetzes gleichzeitig zur Verfügung steht. Bezüglich des geheimen Schlüssels gilt das zum ersten System Gesagte. Zusätzlich zu diesen Nachteilen hat das dritte System noch den schwerwiegenden Nachteil, dass die Ursteuerimpulsfolge ständig übertragen werden muss, wobei die Fehlerverschleppungsrate hoch ist.

Durch die Erfindung soll nun ein verbessertes Chiffriersystem geschaffen werden, welches es gestattet einen grösseren Vorrat an Chiffrierschlüsseln gespeichert zu halten, wobei jedoch durch elektrische und mechanische Sicherungen dafür gesorgt ist, dass die damit zusammenhängenden organisatorischen und sicherheitstechnischen Probleme weitestgehend reduziert sind. Insbesondere soll keine Aufbewahrung und Bewachung von Geheimschlüsseln notwendig sein, die Organisation eines Verbindungsnetzte soll sich um Schlüsselerzeugung, Schlüsselzuteilung und Schlüsselverteilung nicht zu kümmern brauchen, es sollen im Interesse der Sicherheit gegen Zugang durch Unbefugte sowie des Ausschlusses von Fehlmanipulationen keine Schlüsseltabellen und Schlüsselfahrpläne erforderlich sein und weder Teilnehmer noch Organisation sollen die Schlüssel kennen, so dass sie also auch nicht erpressbar sind.

Die diesen Anforderungen gerecht werdende erfindungsgemässe Vorrichtung ist im Patentanspruch 1 beschrieben. Bevorzugte Ausführungsformen und Weiterbildung ergeben sich aus den abhängigen Ansprüchen.

Im folgenden wird die Erfindung anhand der Zeichnung näher erläutert. Es zeigen:

Fig. 1 ein Blockschaltbild eines Sende- bzw. Empfangsteils der Vorrichtung,

Fig. 2 ein Blockschaltbild eines Details aus Fig. 1,

Fig. 3 diverse Diagramme zur Erläuterung verschiedener Arten der Schlüsselausgabe aus dem Schlüsselbehälter,

Fig. 4–6 eine schematische Übersicht verschiedener Verbindungsmöglichkeiten bzw. Nachrichtennetze und die entsprechenden Schlüsselorganisationen, und

Fig. 7 ein Blockschaltschema einer Ladezentrale für die Schlüsselspeicher.

In der Zeichnung sind lediglich die für die Chiffrierung bzw. Dechiffrierung der Nachrichten notwendigen Vorrichtungsteile dargestellt. Diese Teile sind sende- und empfangsseitig gleich aufgebaut und können, wie noch zu erläutern ist, sowohl zum Chiffrieren als auch zum Dechiffrieren verwendet werden. Die eigentlichen Nachrichtenübertragungsmittel, wie Sender, Empfänger usw. oder im einfachsten Fall eine Drahtleitung, sind für das Verständnis der Erfindung belanglos und deshalb nicht gezeigt.

Jeder sende- bzw. empfangsseitige Chiffrier/Dechiffrierteil umfasst einen Eingang bzw. Ausgang 1 für die zu chiffrierende Klarnachricht, einen Ausgang bzw. Eingang 2 für die chiffrierte Nachricht oder Chiffrat, einen Chiffriergenerator 3, einen Mischer 4, eine Synchronisationsstufe 5, zwei Verzögerungsstufen 6 und 7, einen Betriebsartenumschalter 8, eine Steuerbefehlseingabe 9 und einen Schlüsselbehälter 10.

Bei der Nachrichtenein- und -ausgängen 1 und 2 kann es sich um beliebige Eingabetastaturen bzw. Anzeigeeinrichtungen, um Fernschreiber, Drucker, usw. oder ganz einfach um Anschlüsse handeln, über welche dem Chiffrier/Dechiffrierteil Nachrichteninformation zugeführt bzw. entnommen werden kann.

Der Chiffrierrechner 3 und der Mischer 4 sind von bekannter Bauart, vorzugsweise etwa gemäss der US-PS 3 740 475. Ebenso sind auch die Synchronisationsstufe 5 und die von ihr angesteuerten Verzögerungsstufen 6 und 7 konventionell aufgebaut, beispielsweise etwa so wie in den US-PS Nrn. 3 808 365 und 4 145 569 in allen Einzelheiten beschrieben.

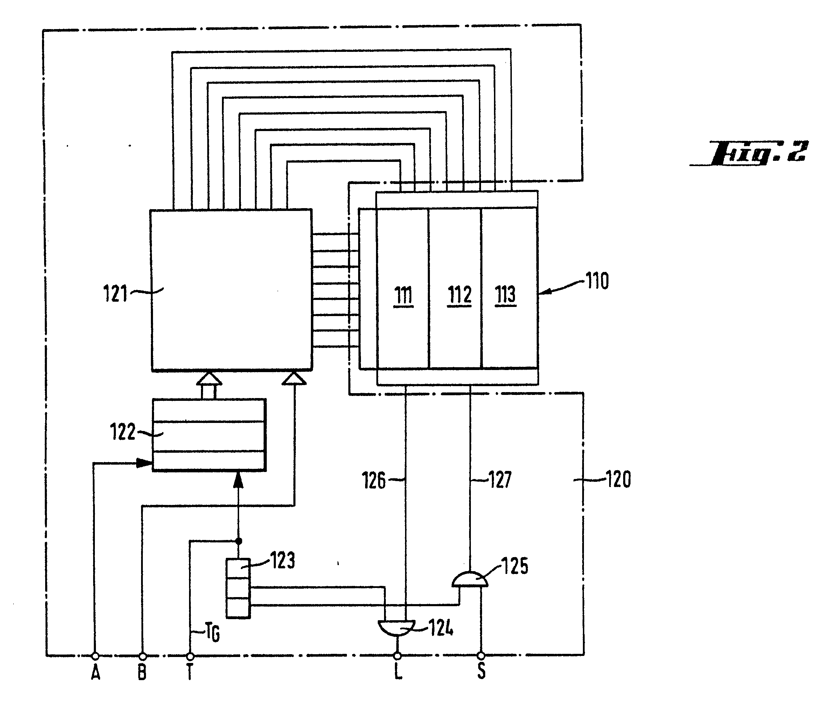

Das wesentlichste Element der erfindungsgemässen Vorrichtung ist der Schlüsselbehälter 10. Er enthält in einem allseitig geschlossenen Gehäuse 101 einen hier z.B. sechs Speicherblöcke 111–116 umfassenden Schlüsselspeicher 110, zwei gleiche, in Fig. 2 näher detaillierte Speichersteuerungen 120 für jeweils drei der Speicherblöcke, einen quarzgesteuerten Taktgeber 130 mit drei Untersetzerstufen 131, 132, 133 und einen dreistelligen Schalter 134, einen Mischer 140 und eine Identifikationsschaltung 150, die ihrerseits eine Identifikationsstufe 151, fünf Gatter-Stufen 152–156 und zwei Schalter 157 und 158 enthält. Ferner ist der Schlüsselbehälter noch mit einer eigenen Stromversorgung z.B. in Form von wieder aufladbaren Akkumulatoren 160 ausgestattet. Die Speichersteuerungen 120, der Taktgeber 130, die Untersetzerstufen 131–133 und der Schalter 134 bilden zusammen eine autonome, d.h. von ausserhalb des Schlüsselbehälters 10 unbeeinflussbare Zeitfensterschaltung, deren Funktionsweise nachstehend noch erläutert wird.

Der Datenverkehr vom und zum Schlüsselspeicher 110 erfolgt über sieben Eingänge $T_2$, $A_1$, $B_1$, $S_1$, $S_2$, L/S und I und drei Ausgänge $T_1$, $L_1$ und K. Die Eingänge $A_1$, $B_1$ und I sind im Unterschied zur vereinfachenden Darstellung der Zeichnung Mehrfachanschlüsse, d.h. sie verbinden gleichzeitig jeweils mehrere Leitungen mit den entsprechenden Funktionsgruppen innerhalb und ausserhalb des Schlüsselbehälters.

Der quarzgesteuerte Taktgenerator 130, der völlig autonom läuft und dessen Taktfrequenz von ausserhalb des Schlüsselbehälters nicht beeinflussbar ist, erzeugt zusammen mit dem ihm nachgeschalteten Untersetzer bzw. Teiler 131 den Nachrichtenakt $T_N$, der am Ausgang $T_1$ entnommen und über die Verzögerungsstufe 6 dem Chiffriergenerator 3 zugeführt ist. Die Frequenz des Nachrichtentakts $T_N$ entspricht den üblichen Nachrichtensystemen, also z.B. etwa 50 bis 9600 bit/sec.

Aus dem Nachrichtentakt $T_N$ erzeugen die beiden im Normalfall (gezeichnete Stellung des Schalters 134) nachgeschalteten Untersetzer 132 und 133 zwei weitere Takte, und zwar den schnelleren Zusatzschlüsseltakt $T_Z$ und langsameren Grundschlüsseltakt $T_G$. Diese beiden Takte sind über den Wechselschalter 134 den mit T bezeichneten Takteingängen der den Speicherblöcken 111–113 bzw. 114–116 zugeordneten Speichersteuerungen 120 zugeführt. Über die Frequenzen dieser Takte wird weiter unten noch gesprochen.

Die beiden identisch aufgebauten Speichersteuerungen 120 enthalten je einen Adress-Dekodierer 121, einen setzbaren Adresszähler 122, eine Taktverzögerungsschaltung 123 und zwei Tore 124 und 125.

Der Grundschlüsseltakt $T_G$ bzw. der Zusatzschlüsseltakt $T_Z$ gelangt über den Takteingang T an den Adresszähler 122 und über die Verzögerungsschaltung 123 zu den Toren 124 und 125. Mit jedem Taktimpuls wird der Adresszähler inkrementiert und dann zuerst die Lese-Linie 126 über das Tor 124 mit dem Lese-Ausgang L und daraufolgend die Schreib-Lösch-Linie 127 über das Tor 125 an den Schreib-Lösch-Eingang S der Steuerung 120 gelegt. Sofern sich der Schalter 157 der Identifikationsschaltung 150 in der in der Zeichnung dargestellten Lösch-Stellung befindet, was seiner Normalstellung entspricht, wird somit nach jedem Auslesen einer zu den Blöcken 111–113 gehörenden Speicherstelle ihr Inhalt automatisch gelöscht. Der Schalter 158 besitzt keine Lösch-Stellung, der Inhalt der Blöcke 114–116 bleibt somit in jedem Falle erhalten.

Über den Blockwahl-Eingang B, der direkt mit dem Dekodierer 121 verbunden ist, kann jeder der drei Blöcke 111–113 bzw. 114–116 selektiv angewählt werden. Ähnlich kann der Adresszähler 122 über den Adresswahl-Eingang A direkt auf jede beliebige Speicheradresse gesetzt werden. Die Blockwahleingänge B und die Adresswahleingänge A der beiden Steuerungen 120 sind parallel geschaltet und über Mehrfachleitungen und die Tore 153 und 154 der Identifikationsschaltung 150 mit den entsprechenden Eingängen $B_1$ und $A_1$ des Schlüsselbehälters verbunden. Diese Eingänge stehen ihrerseits wieder in Verbindung mit der Steuerbefehlseingabe 9, mittels welcher, sofern die Tore 153 und 154 geöffnet sind, die Adressen und Blöcke des Speichers von Hand selektiv ansteuerbar sind. Im Normalfall werden, wie noch zu erläutern ist, allerdings nur die Speicherblöcke von Hand ausgewählt, die Adressierung der einzelnen Speicherstellen erfolgt fortlaufend automatisch und autonom durch den Taktgeber 130.

Die Lese-Ausgänge L der beiden Speichersteuerungen 120 führen zum Mischer 140, bei dem es sich beispielsweise um einen Modulo-2-Mischer handeln kann. Der Ausgang des Mischers ist über das Tor 155 und den Lese-Ausgang $L_1$ des Schlüsselbehälters mit der Verzögerungsstufe 7 verbunden. Die aus je einem der beiden Speicherblockgruppen 111–113 und 114–116 ausgelesenen Informationen werden also im Mischer gemischt und mehr oder weniger verzögert dem Chiffriergenerator 3 zugeführt.

Die Schreib-Lösch-Eingänge S der Speichersteuerungen 120 sind je über den Schalter 157 bzw. 158 an die entsprechenden Eingänge $S_1$ und $S_2$ des Schlüsselbehälters geführt. Sofern sich die Schalter in der nicht gezeichneten Schreibposition befinden, kann über diese Eingänge Information in den Speicher bzw. die Speicherblöcke eingeschrieben werden.

Die Umschaltung der beiden Schalter 157 und 158 von der dargestellten Normalposition in die Schreibposition erfolgt über die Gatter-Stufe 156 mittels eines über den Eingang L/S zuführbaren externen Signals. Dies ist jedoch nur während des Ladens des Speichers nötig und wird weiter unten besprochen.

Mittels der Befehlseingabe 9 kann über den Taktumschalteingang $T_2$ und das Tor 152 der Umschalter 134 betätigt werden. In seiner der gezeichneten Stellung gegenüberliegenden Stellung ist der Untersetzer 132 inaktiv und der Untersetzer 133 überbrückt. In dieser Stellung gelangt also der Nachrichtentakt $T_N$ direkt an die Takteingänge T der beiden Speichersteuerungen 120. In der mittleren Schalterstellung sind die Speichersteuerungen 120 nicht mit dem Taktgenerator verbunden. Diese beiden Stellungen des Schalters 134 sind nur für Sonderfälle vorgesehen und werden weiter unten noch erläutert werden.

Über den Mehrfach-Eingang I, der mit der Identifikationsstufe 151 verbunden ist, kann letzterer, z.B. mittels einer Tastatur 11, eine Identifikations-Information eingegeben werden. Die Identifikationsstufe 151 vergleicht die eingegebene Information mit einer in ihr gespeicherten Information und öffnet bei Übereinstimmung die Gatter-Stufen 152–156. Bei Nicht-Übereinstimmung der eingegebenen mit der gespeicherten Identifikations-Information wird an den Ausgang K ein Fehlersignal abgegeben, welches dann in beliebiger Weise zu Blockierungszwecken oder zur Auslösung eines Alarms benutzt werden kann.

Die Identifikations-Information kann beispielsweise aus einer dreiziffrigen Zahl bestehen. Damit (von Unbefugten) nicht alle (1000) Möglichkeiten für eine solche Zahl durchprobiert werden können, kann die Identifikationsstufe mit Sicherungsmitteln ausgestattet sein, welche z.B. nach drei falschen Eingaben jede weitere Eingabe verhindern und eventuell einen Alarm auslösen. Identifikationsstufen bzw. -systeme dieser Art sind in zahllosen Varianten, beispielsweise aus der US-PS 3 806 874, bekannt und brauchen deshalb nicht weiter erläutert zu werden.

Der Zugriff zum Speicher inklusive das Einschreiben von Information sowie die Betätigung des Schalters 134 und damit die Umschaltung der den Speicherblöcken zugeführten Lesetakte ist also durch die Identifikationsschaltung 150 gesichert und nur möglich, wenn die richtige Identifikationsinformation eingegeben wurde. Es versteht sich, dass für einfachere Systeme bzw. Anwendungen auch auf die Identifikationsschaltung 150 verzichtet werden kann.

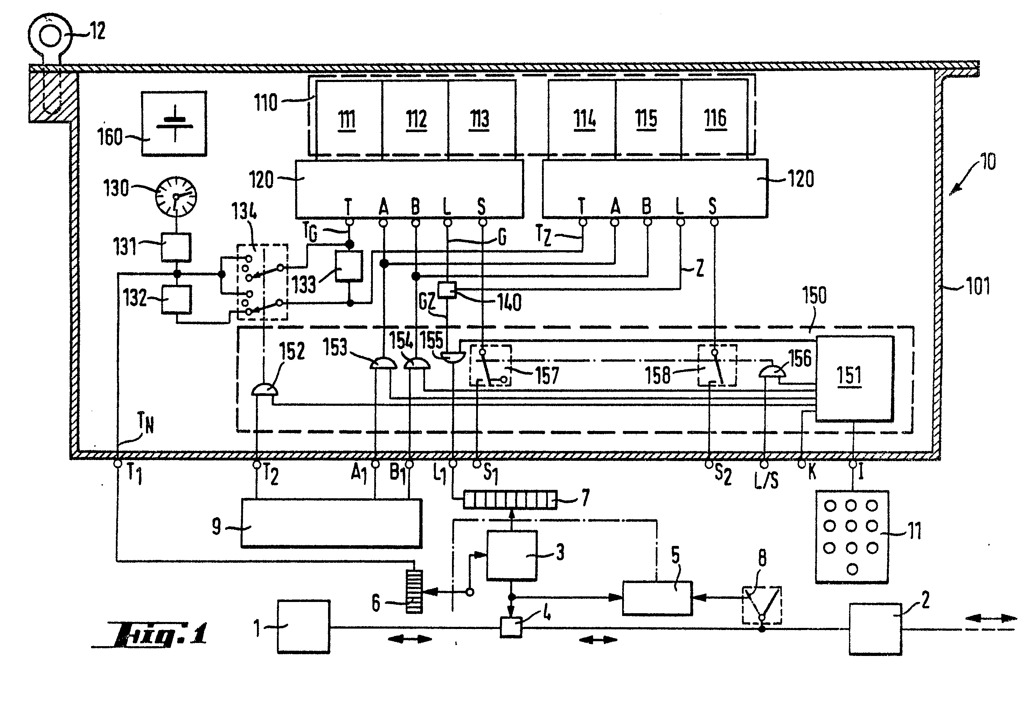

In Fig. 2 sind der Adressdekodierer 121 und die Speicherblöcke 111–113 als getrennte Bauelemente dargestellt. Dies dient jedoch nur der leichteren Verständlichkeit und ist keinesfalls zwingend, sondern hängt von der Art der zum Einsatz gelangenden Speichertypen ab. Gleiches gilt auch für die Aufteilung des Speichers 110 (Fig. 1) in zwei Blockgruppen. Auch diese Zwei-Teilung soll lediglich die Anschaulichkeit verbessern und das Verständnis der nachfolgend erläuterten Funktionsweise der Vorrichtung erleichtern. Selbstverständlich könnten anstelle der beiden Speicherblockgruppen und der beiden Speichersteuerungen auch nur ein einziger Speicher und eine einzige Steuerung vorhanden sein, wobei dann eben diese einzige Steuerung so ausgelegt sein müsste, dass ein äquivalenter Funktionsablauf gewährleistet ist. Insbesondere und ganz bevorzugt können eine solche Steuerung und überhaupt auch die meisten übrigen Teile der Vorrichtung durch geeignet programmierte Mikro- bzw. Minicomputersysteme realisiert werden.

Für das Folgende wird davon ausgegangen, dass der Schlüsselbehälter 10 an die übrigen Teile der Vorrichtung angeschlossen ist, die Gatter-Stufen 152–156 nach Eingabe der richtigen Identifikations-Information geöffnet sind und der Synchronismus zwischen Sende- und Empfangsteil dargestellt ist. Letzteres kann, wie in den US-PS Nrn. 3 808 365 und 4 145 569, z.B. dadurch erfolgen, dass von den Chiffriergeneratoren 3 sende- und empfangsseitig erzeugte Pseudo-Zufallsimpulsfolgen korreliert und anhand der Korrelationswerte die Verzögerungsstufen 6 und 7 solange verstellt werden, bis Synchronismus eintritt. Der Betriebsartenumschalter 8 steht dabei empfangsseitig in seiner in der Fig. 1 strichliert dargestellten Stellung. Ferner wird vorausgesetzt, dass der Schlüsselspeicher geladen ist. Wie dies erfolgt, wird weiter unten noch ausführlich beschrieben.

Der Schlüsselbehälter 10 bzw. die in ihm enthaltenen Funktionsgruppen arbeiten völlig autonom. Das globale Resultat des Zusammenwirkens seiner diversen Funktionsgruppen ist, dass laufend in durch den Taktgeber und die Untersetzer vorgegebenen Zeitabständen, beispielsweise etwa im 10-Sekunden-Takt, Schlüssel-Information aus dem Speicher 110 ausgelesen und über den Lese-Ausgang $L_1$ und die Verzögerungsstufe 7 an den Chiffriergenerator 3 abgegeben wird, so dass die in diesem wirksame Schlüsselinformation laufend erneuert wird. Im Chiffriergenerator, der z.B. in der US-PS 3 740 475 detailliert beschrieben ist, ist immer nur eine gewisse Menge von Schlüssel-Information wirksam, d.h., die von ihm erzeugte Chiffriersequenz ist abhängig von einer begrenzten Anzahl eingegebener Schlüsselbits. Nach einer gewissen Zeit wird somit die im Chiffriergenerator wirksame Schlüssel-Information vollständig erneuert sein.

Die Erneuerung der Schlüssel-Information kann auf verschiedene Arten erfolgen. Die einfachste Art ist bitweise, d.h. in vorgeschriebenen Intervallen, z.B. alle 10 Sekunden, wird ein Schlüsselbit aus dem Speicher 110 in den Chiffriergenerator transferiert. Genausogut könnte die Schlüssel-Information jedoch auch in grösseren oder kleineren Blöcken zu je mehreren Bit erfolgen, wobei die maximale Grösse (Bitanzahl) eines Blocks sinnvollerweise natürlich nicht die der auf einmal wirksamen Schlüssel-Information im Chiffriergenerator übersteigt.

Die Erneuerung der Schlüssel-Information erfolgt selbstverständlich sende- und empfangsseitig synchron.

Die sendeseitig vom Nachrichteneingang 1 kommende Klar-Nachrichteninformation wird im Takt des Nachrichtentakts $T_N$ bitweise im Mischer 4 mit der vom Chiffriergenerator 3 erzeugten Chiffriersequenz gemischt. Das Mischprodukt, welches die chiffrierte Nachricht darstellt, steht am Chiffrat-Ausgang 2 zur Verfügung und gelangt von dort über einen nichtdargestellten Übertragungskanal zum Chiffrat-Eingang 2 des Empfängers. Dort wird das Chiffrat mit der empfangsseitigen Chiffriersequenz, die selbstverständlich identisch mit der sendeseitigen sein muss, im Mischer 4 zur ursprünglichen Klar-Nachricht zurückgemischt und steht dann am empfangsseitigen Klar-Nachrichtenausgang 1 zur Verfügung.

Der Schlüsselspeicher 110 enthält einen grossen Vorrat von Schlüssel-Information, der für einen längeren Zeitraum, z.B. etwa 1 Jahr, ausreicht. Für diesen Zeitraum steht somit eine autonome Schlüsselinformationsquelle zur Verfügung, die den wirksamen Schlüssel laufend erneuert, so dass alle die bei den bisher bekannten Chiffriersystemen im Umgang mit den Chiffrierschlüsseln notwendigen Massnahmen und Vorkehrungen entfallen können.

Die Schlüssel-Information kann aus einem einzigen Schlüssel oder aus zwei Schlüsseln, einem sogenannten Grund- und einem Zusatzschlüssel bestehen. Falls nur ein einziger Schlüssel verwendet wird, muss der Schlüsselvorrat im Interesse hoher Chiffrierfestigkeit sehr gross sein. So ergibt sich beispielsweise für den Fall, dass der Schlüsselspeicherinhalt z.B. für 1 Jahr ausreichen soll, und für eine Schlüsselerneuerungsrate = Schlüsselinformationsausleserate von 1 bit pro 10 Sekunden eine minimale Speicherkapazität von rund 3 Mbit.

Durch Verwendung eines Zweischlüsselsystems lässt sich der benötigte Schlüsselvorrat wesentlich reduzieren. Gemäss den z.B. in der US-PS Nr. 3 291 908 beschriebenen Pinzipien dieser Zweischlüsselsysteme kann bei gleichbleibender Chiffrierfestigkeit ein und derselbe Grundschlüssel mehrmals verwendet werden, wenn er jedesmal mit einem anderen Zusatzschlüssel, der nicht einmal geheim sein muss, kombiniert wird. Dabei können die beiden Schlüssel dem Chiffriergenerator über getrennte Eingänge eingegeben werden oder aber zuvor miteinander gemischt und das Mischprodukt dann dem Chiffriergenerator wie ein einziger Schlüssel zugeführt werden.

Die in Fig. 1 dargestellte Vorrichtung ist für das genannte Zweischlüsselsystem ausgelegt. Die Speicherblöcke 111–113 enthalten Grundschlüsselinformation, die Blöcke 114–116 Zusatzschlüsselinformation. Für das Folgende seien nur die Blöcke 111 und 114 betrachtet.

Die Zusatzschlüsselinformation Z wird im vom Untersetzer 132 gebildeten Zusatzschlüsseltakt $T_Z$ von beispielsweise etwa 1 bit pro 10 Sekunden ausgelesen. Die Auslesung der Grundschlüssel-Information hingegen erfolgt im wesentlich langsameren, durch den dritten Untersetzer 133 heruntergeteilten Grundschlüsseltakt. Die beiden Schlüssel G und Z werden im Mischer 140 zum Kombinationsschlüssel GZ gemischt und dieser dem Chiffriergenerator 3 zugeführt.

Das Zusatzschlüsselinformationsvorrat Z ist begrenzt. Wie schon weiter oben erwähnt, wird die ausgelesene Information im Unterschied zu den Blöcken 111–113 nicht gelöscht, sondern bleibt im Speicher erhalten. Die des Blöcken 114–116 zugeordnete Speichersteuerung ist so organisiert, dass die Information aus jedem Block zyklisch wiederholt ausgelesen wird, d.h., wenn das letzte Bit des Zusatzschlüsselvorrats ausgelesen ist, beginnt die Auslesung desselben Vorrats wieder von vorne mit dem ersten Bit (an der ersten Adresse).

Damit nun die bei Zweischlüsselsystemen bestehende Forderung, wonach ein und derselbe Grundschlüssel nur jeweils zusammen mit verschiedenen Zusatzschlüsseln verwendet werden darf, erfüllt ist, müssen der Zusatzschlüsselvorrat und das Untersetzungsverhältnis des Untersetzers 133 so aufeinander abgestimmt sein, dass der Zusatzschlüsselvorrat erst dann vollständig ausgelesen ist, wenn ein komplett neuer Grundschlüssel in den Chiffriergenerator geladen worden ist. Wird z.B. der momentan im Chiffriergenerator wirksame Schlüssel zu 100 bit angenommen, so muss der Vorrat an Zusatzschlüsselinformation mindestens 100mal dem Untersetzungsverhältnis des Untersetzers 133 betragen.

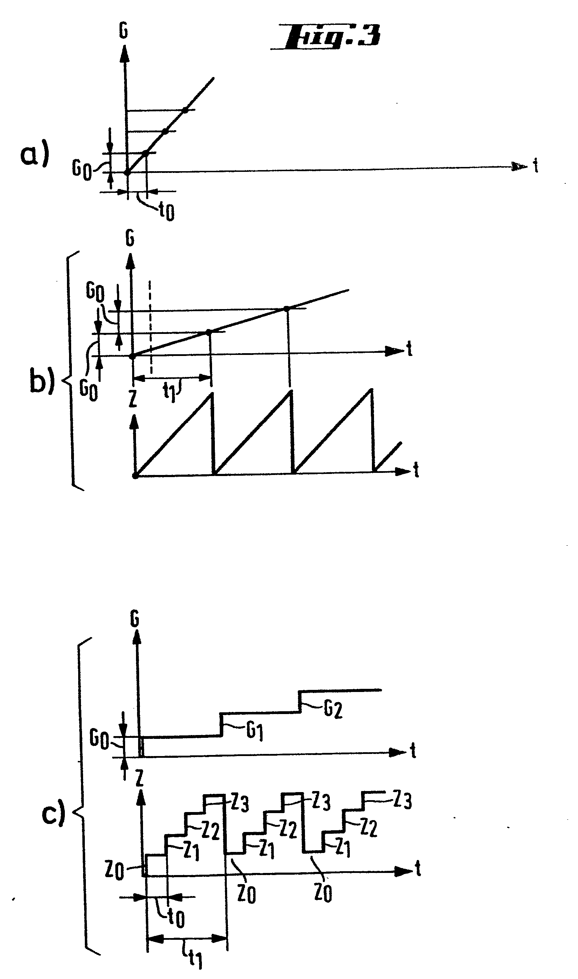

In den Fig. 3a–c sind verschiedene Möglichkeiten der Schlüsselerneuerung graphisch dargestellt. Auf der Abszisse ist jeweils die Zeit aufgetragen, die Ordinaten zeigen die ausgegebenen Schlüsselinformationsbits.

Fig. 3a zeigt den einfachsten Fall eines Einschlüsselsystems. Hier wird in der Zeit $t_0$, die der mittleren Nachrichtenhäufigkeit entspricht – sie beträgt erfahrungsgemäss beispielsweise etwa 1 Nachrichtenübermittlung pro 5 Minuten – die Menge $G_0$ an Schlüsselinformation ausgegeben. $G_0$ sollte etwas der Menge der im Schlüsselgenerator momentan wirksamen Schlüsselinformation entsprechen. Unter diesen Umständen kann angenommen werden, dass jede Nachricht mit einem komplett neuen Schlüssel chiffriert wird.

Fig. 3b erläutert das in Fig. 1 realisierte Zweischlüsselsystem. Hier wird in der Zeit $t_1$ die gesamte Zusatzschlüsselinformation ausgelesen und dann wiederholt. Gleichzeitig wird während der Zeit $t_1$ die Mente $G_0$ an Grundschlüsselinformation ausgelsen. $t_1$ ist, wie aus dem weiter oben Erläuterten erhellt, wesentlich grösser als $t_0$, so dass also der Vorrat an Grundschlüsselinformation wesentlich langsamer aufgebraucht wird bzw. ein kleinerer Vorrat genügt.

Fig. 3c zeigt eine weitere Variante der Schlüsselerneuerung. Hier wird die Grundschlüsselinformation nicht laufend, sondern in Zeitabständen $t_1$ blockweise ausgegeben, wobei die ausgelesenen Mengen $G_0$, $G_1$, usw. jeweils gleich gross sind. Gleichzeitig wird die Zusatzschlüsselinformation Z in Zeitabständen $t_0$ ebenfalls blockweise ausgelesen. Die ausgelesenen Zusatzinformationsmengen $Z_0$, $Z_1$, usw. ... entsprechen dabei den Mengen $G_0$. Somit wird also der wirksame Grundschlüssel jeweils nach $t_1$ erneuert. Während $t_0$ ist ein Satz vollständig verschiedener Zusatzschlüssel $Z_0$, $Z_1$ ... usw. wirksam, die mit jedem neuen Grundschlüssel wiederholt werden.

Selbstverständlich ist es auch möglich, die Schlüsselerneuerungsmöglichkeiten der Fig. 3b und 3c zu kombinieren. So könnte z.B. die Auslesung der Grundschlüsselinformation bitweise und die der Zusatzschlüsselinformation blockweise erfolgen. Das Umgekehrte wäre ebenfalls möglich. Selbstverständlich könnte die pro blockweise Auslesung erneuerte Schlüsselinformationsmenge auch geringer als die im Chiffriergenerator gleichzeitig wirksame Menge sein.

Die in Fig. 1 und 2 dargestellte Vorrichtung ist für bitweises Auslesen der Schlüsselinformation ausgelegt. Die notwendigen Änderungen für blockweises Auslesen liegen im Wissensbereich jedes mit der Elektronik vertrauten Fachmanns und bedürften deshalb keiner weiteren Erläuterung.

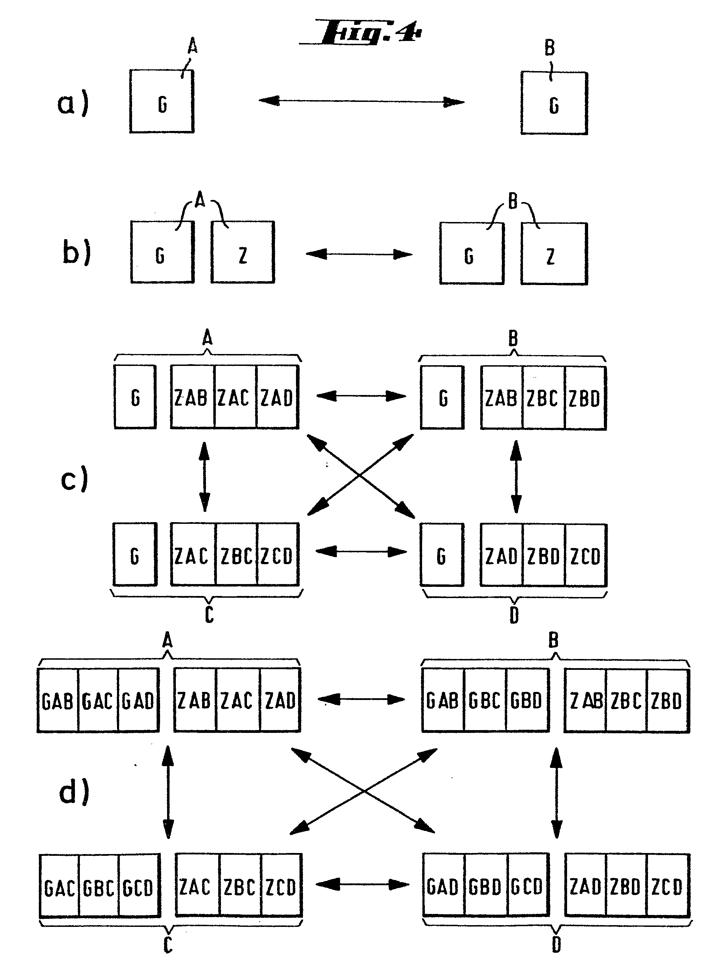

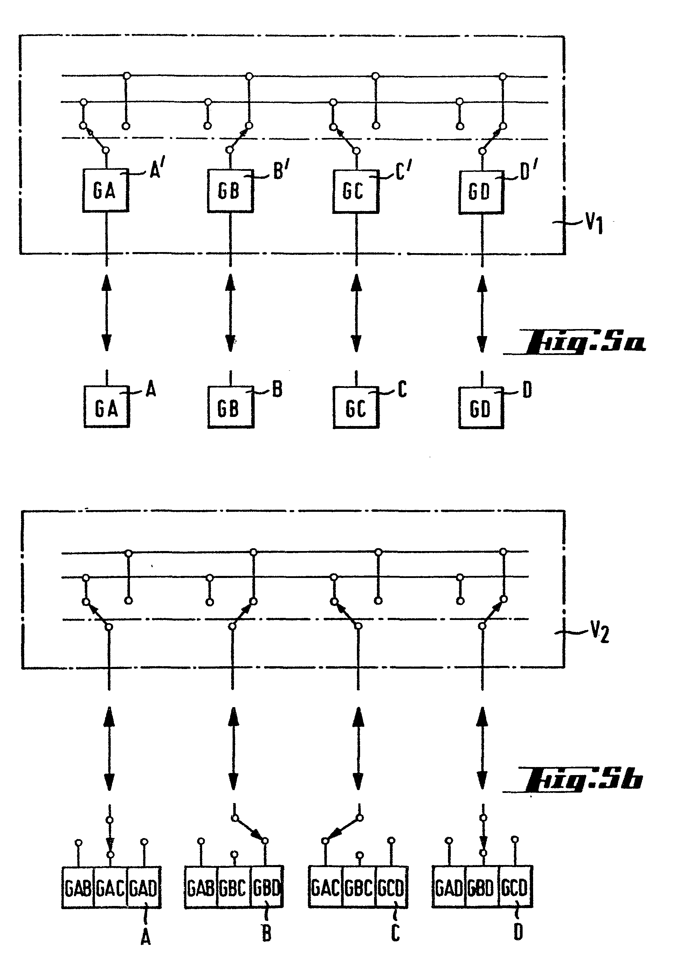

In den Fig. 4 und 5 sind verschiedene Nachrichtenübermittlungsnetze mit den jeweils dafür in Frage kommenden Schlüsselspeichern dargestellt.

Fig. 4a zeigt eine einfache Punkt-Punkt-Verbindung, bei der die beiden Teilnehmer mit einem Schlüsselspeicher ausgestattet sind, der je eine einzige (Grund-)Schlüsselinformation G enthält.

Fig. 4b zeigt eine Variante dieser Punkt-Punkt-Verbindung, bei der jeder Schlüsselspeicher Grund- und Zusatzschlüsselinformation G bzw. Z enthält.

Fig. 4c zeigt ein Netz mit vier Teilnehmern A–D. Jeder Teilnehmer besitzt eine allen Teilnehmern gemeinsame Grundschlüsselinformation G und zusätzlich für jede seiner drei möglichen Verbindungen zu den anderen Teilnehmern eine separate Zusatzschlüsselinformation. Diese Zusatzschlüsselinformationen Z sind in der Zeichnung durch die Buchstaben der zu verbindenden Gesprächspartner gekennzeichnet, für die Verbindung A–B z.B. also ZAB, usw. Die gemeinsame Grundschlüsselinformation G und die (pro Teilnehmer) drei Zusatzschlüsselinformationen können in separaten Schlüsselbehältern gespeichert sein, also je ein Behälter für G + ZAB, G + ZAC und G + ZAD, usw. Vorzugsweise sind alle diese Informationen aber in verschiedenen Speicherbereichen desselben Schlüsselspeichers innerhalb eines einzigen Schlüsselbehälters untergebracht, wie dies in Fig. 1 dargestellt ist. Die Speicherblöcke bzw. -bereiche 114–116 enthalten drei Zusatzschlüsselinformationen, die je einer von drei Verbindungsmöglichkeiten zugeordnet sind. Bei der Erstellung der gewünschten Verbindung wird mittels der Befehlseingabe 9 über den Eingang $B_1$ des Schlüsselbehälters der dieser Verbindung zugeordnete Speicherblock ausgewählt.

Anstelle eines einzigen, für alle Teilnehmer eines Netzes gemeinsamen Grundschlüssels könnte gemäss Fig. 4d auch für jede Einzelverbindung ein eigener Grundschlüssel GAB, GAC usw. vorgesehen sein, dem dann jeweils wie bei Fig. 4b ein verbindungsspezifischer Zusatzschlüssel ZAB, ZAC usw. beigeordnet ist. Auch dieser Fall ist in Fig. 1 bereits berücksichtigt, wo die Speicherblöcke 111–113 je einen solchen verbindungsspezifischen Grundschlüssel enthalten. Die Auswahl des betreffenden Speicherblocks erfolgt wie für die Zusatzschlüssel-Blöcke mittels der Befehlseingabe 9 über die Blockwahleingänge B1. Der Vorteil dieses Systems gegenüber dem nach Fig. 4c liegt vor allem in der höheren Sicherheit, indem, wenn die Grundschlüssel eines Teilnehmers, z.B. des Teilnehmers A, verraten sind, nur die Verbindungen mit A verraten sind, aber die übrigen Verbindungen unangetastet bleiben.

Gemäss einer weiteren, in der Zeichnung nichtdargestellten Variante könnte auch für jede Einzelverbindung des Netzes ein eigener Grundschlüssel GAB, GAC ... usw. und ein allen Verbindungen gemeinsamer Zusatzschlüssel Z vorgesehen sein, wobei die einzelnen Grundschlüssel relativ klein und der Zusatzschlüssel relativ gross sein könnten.

Als Beispiel sei ein Netz von 250 Teilnehmern angenommen. Für jede der 249 Verbindungsmöglichkeiten eines Teilnehmers sei ein Grundschlüsselvorrat von 4000 bit vorhanden, wovon täglich 10 bit ausgegeben und im Speicher gelöscht werden (wirksam sind natürlich stets mehr als 10 bit). Der Vorrat reicht somit für rund 1 Jahr. Jeder Teilnehmer hat insgesamt $249 \cdot 4000 = $ rund 1 Mbit Grundschlüsselvorrat.

Unter der Annahme, der im Chiffriergenerator wirksame Grundschlüssel umfasse z.B. 100 bit, ist somit nach jeweils 10 Tagen ein völlig neuer Grundschlüssel à 100 bit wirksam. Der Zusatzschlüsselvorrat muss daher ebenfalls für 10 Tage reichen. Unter Zugrundelegung eines einminütigen Zusatzschlüsselwechsels à 64 bit ergibt dies einen erforderlichen Zusatzschlüssel von rund 1 Mbit.

Jeder der 250 Teilnehmer hat also 1 Mbit Grundschlüssel und 1 Mbit Zusatzschlüssel, total also 2 Mbit Schlüsselinformation. Bei 250 Teilnehmern beträgt die Gesamtanzahl aller verschiedenen Grundschlüssel $249 \cdot 125 > 31 \cdot 125$ entsprechend rund 125 Mbit Totalinformation. Diese 125 Mbit werden dann jährlich für alle Teilnehmer erneuert, was bei einer Datenrate von 1 Mbit/sec rund 2 Minuten erfordern würde.

Bei On-Line-Verbindungen ist für den momentanen Stand von Grund- und Zusatzschlüssel direkt die momentane Zeit massgebend, bei Off-Line-Verbindungen ist dies nicht möglich. Hier können die Schlüssel aber durch Datum und Uhrzeit definiert werden. Schlüsselwechsel erfolgen hier vorzugsweise blockweise, z.B. der Grundschlüssel täglich um z.B. 00.00 Uhr, der Zusatzschlüssel im 1-Minuten-Rhythmus.

Fig. 5a und 5b zeigen zwei Nachrichten-Netze mit je vier Teilnehmern A–D, die im Unterschied zu den Netzen nach Fig. 4 nicht direkt, sondern über eine Zentrale $V_1$ bzw. $V_2$ untereinander verbunden sind. Gemäss Fig. 5a umfasst die Zentrale $V_1$ für jeden der Teilnehmer A–D eine eigene chiffrier/Dechiffrierstation A'–D', welche untereinander durch nicht näher bezeichnete, von den Teilnehmern A–D aus fernsteuerbare Schalter und Leitungen verbindbar sind. Die einzelnen Verbindungen von den Teilnehnerb A–D zu den zugeordneten Stationen A'–D' in der Zentrale können entsprechend Fig. 4a oder 4b ausgebildet sein und arbeiten mit je einem eigenen Schlüssel, hier z.B. GA, GB, GC und GD. Innerhalb der Zentrale $V_1$ werden die Nachrichten im Klartext übertragen.

Beim Zentralennetz nach Fig. 5b enthält die Zentrale $V_2$ keine Chiffrier-Dechiffrierstationen, sondern lediglich diverse Querverbindungsleitungen und -schalter, die eventuell auch von den Teilnehmern A–D aus ferngesteuert werden können. Hier erfolgt also auch innerhalb der Zentrale die Nachrichtenverbindung im Chiffrat. Das Zentralennetz nach Fig. 5b arbeitet also im Prinzip gleich wie das Direkt-Netz gemäss Fig. 4c oder 4d. Dementsprechend ist auch für jede der sechs möglichen Verbindungen ein eigener Schlüssel GAB, GAC, usw. vorgesehen.

Die Fig. 4 und 5 zeigen lediglich einige prinzipielle Beispiele von Nachrichten-Verbindungsnetzen. Es versteht sich, dass diese Aufzählung keineswegs vollständig ist und zahllose Varianten möglich sind, ohne den Rahmen der Erfindung zu verlassen. So könnte beispielsweise beim sogenannten Duplex-Betrieb für jede Übertragungsrichtung ein eigener Schlüssel bzw. Schlüsselsatz verwendet werden.

Wie schon erwähnt, ist bei dem in Fig. 3a und 4a skizzierten Einschlüsselsystem pro Verbindung ein relativ grosser Schlüsselinformationsvorrat nötig. Nimmt man an, dass im Chiffriergenerator 3 jeweils etwa 100 bit Schlüsselinformation gleichzeitig an der Bildung der Chiffriersequenz teilnehmen, und dass der gesamte Schlüsselinformationsvorrat für z.B. 1 Jahr reichen soll, so käme man bei einer Erneuerungsrate von 6 bit pro Minute auf einen Gesamtschlüsselvorrat von rund 3 Mbit. Unter diesen Voraussetzungen wird der wirksame Schlüssel im Chiffrierrechner rund alle 16 Minuten vollständig erneuert, so dass eine ausreichend hohe kryptologische Sicherheit gewährleistet ist.

Das folgende Beispiel soll das Verbindungsnetz nach Fig. 4c unter Verwendung eines Zweischlüsselsystems illustrieren.

Es sei angenommen, dass für die allen Teilnehmern gemeinsame Grundschlüsselinformation G pro Schlüsselbehälter bzw. Schlüsselspeicher 256 Kbit Speicherkapazität zur Verfügung stehen. Diese 256 Kbit Grundschlüsselinformation werden während eines Jahres laufend, d.h. bitweise z.B. im 2-Minuten-Takt, an den Chiffriergenerator ausgegeben, also 30 bit pro Stunde. Unter der Annahme, dass der wirksame Schlüssel im Chiffrierrechner 90 bit beträgt, erfolgt somit alle 3 Stunden ein voller (Grund-)Schlüsselwechsel. Während dieser Zeit darf in keiner der Verbindungen des Netzes mit gleichem Grundschlüssel und gleichem Chiffrierprogramm chiffriert werden, und natürlich auch nicht zu verschiedenen Zeiten (innerhalb dieser 3 Stunden) in der gleichen Verbindung.

Nimmt man nun an, dass für eine Verbindung höchstens alle 5 Minuten eine neue Nachrichtenübertragung erfolgt, erfordert dies in 3 Stunden 36 verschiedene Zusatzschlüssel. Für ein Netz mit z.B. 70 simultanen Verbindungsmöglichkeiten ( = z.B. für ein Zweiernetz entsprechend 140 Teilnehmer) sind somit $70 \times 36 = 2520$ verschiedene Zusatzschlüssel notwendig. Nimmt man für einen vollständigen Zusatzschlüssel 100 bit an, so ist für die gesamte Zusatzschlüsselinformation eine Speicherkapazität von 252 000 bit, also rund 256 Kbit erforderlich. Zusammen mit dem Grundschlüssel ergibt dies eine Gesamtspeicherkapazität von 512 Kbit gegenüber 3 Mbit beim Einschlüsselsystem.

Die Grundschlüsselinformation wird sofort nach der Eingabe in den Chiffriergenerator gelöscht, d.h., sie wird nur einmal verwendet. Während der 3 Stunden, in denen ein vollständiger Grundschlüsselwechsel erfolgt, wird alle 5 Minuten in jeder der angenommenen 70 Verbindungen ein neuer Zusatzschlüssel in den Chiffriergenerator transferiert. Die Zusatzschlüsselinformation wird nicht gelöscht, sondern im nächsten 3-Stunden-Intervall wieder verwendet, usw.

Die Eingabe des Zusatzschlüssels in den Chiffriergenerator kann, wie schon gesagt, bitweise oder blockweise erfolgen. Beispiele dafür wurden schon anhand der Fig. 3 erläutert.

Im Unterschied zu den bekannten Zweischlüsselsystemen – siehe beispielsweise US-PS 3 291 908, braucht der Zusatzschlüssel nicht an den Empfänger übertragen zu werden. Er kann vielmehr, da er ja genau so wenig bekannt ist wie der Grundschlüssel, als zusätzliche kryptologische Sicherheit aufgefasst werden.

Anstelle der direkten Speicherung der Zusatzschlüsselinformation im Schlüsselspeicher könnte im Schlüsselbehälter auch ein selbst wieder durch einen Steuer-Schlüssel steuerbarer Schlüsselgenerator, z.B. ein rückgekoppeltes Schieberegister vorgesehen sein, der diese Zusatzschlüsselinformation in Abhängigkeit dieses dann anstelle des Zusatzschlüssels im Schlüsselspeicher gespeicherten Steuerschlüssels erzeugt.

Das folgende Beispiel illustriert ein Nachrichtennetz entsprechend Fig. 4d, allerdings mit 20 Teilnehmern. Bei diesem Netz sind die Inhalte der Schlüsselspeicher für jeden Teilnehmer verschieden, es gibt pro Teilnehmer etwa so viele verschiedene Grundschlüssel wie Teilnehmer und ebenso viele diesen Grundschlüsseln zugeordnete Zusatzschlüssel. Nimmt man als totale Grundschlüsselinformation 730 Kbit an, so ergibt dies pro Teilnehmer 36,5 Kbit. Unter Zugrundelegung eines Jahres als Abgabe-Periode stehen pro Teilnehmer 100 bit Grundschlüsselinformation pro Tag zur Verfügung. Dies soll dem wirksamen Schlüssel im Chiffriergenerator entsprechen, so dass als pro Tag ein vollständiger Grundschlüsselwechsel erfolgt. Der Zusatzschlüssel, der ebenfalls vollständig zu 100 bit angenommen wird, soll nun alle 5 Minuten vollständig erneuert werden. Dies erfordert einen Vorrat von 300 Zusatzschlüsseln pro Tag pro Teilnehmer, insgesamt also $300 \cdot 100 \cdot 20 = 600\,000$ bit Zusatzschlüsselinformation.

Ein wesentliches Merkmal des vorstehend beschriebenen Chiffriersystems ist die periodische bit- oder blockweise Erneuerung der im Chiffriergenerator wirksamen Schlüsselinformation. Diese Schlüsselinformation wird dazu aus einem Schlüsselspeicher abgerufen, und zwar zu vorgegebenen Zeitpunkten oder in vorgegebenen Zeitintervallen. Wesentlich ist, dass die Auslesung des Schlüsselspeichers nur zu diesen Zeitpunkten bzw. nur in den vorgegebenen Zeitintervallen erfolgen kann. Dadurch ist nämlich ein unbefugter Zugriff zur gespeicherten Schlüsselinformation so gut wie ausgeschlossen. Dies wird dadurch erreicht, dass im Schlüsselbehälter selbst ein vollständig autonomer Taktgenerator angeordnet ist, der die Zeitpunkte der Speicherauslesung festlegt.

Der Schlüsselbehälter 10 selbst ist so konzipiert, dass er keinen unbefugten Zugriff zum Schlüsselspeicher zulässt. Neben dem autonomen Taktgeber bzw. dem Takttiefpass gehören zu den Massnahmen und Vorkehrungen, die zur Erfüllung dieser Forderung beitragen, die schon erwähnte Identifikationsschaltung sowie gewisse, nur durch den Schlüssel 12 symbolisch dargestellte Mittel, welche bei unbefugter Öffnung des Behältergehäuses die gesamte im Schlüsselspeicher enthaltene Information oder wenigstens Teile davon zerstören. Dies kann beispielsweise durch in den Wandungen des Behälters verlegte Zerstörungssensoren verschiedener Art ausgelöst werden. Beispielsweise können die Versorgungsleitungen und die Taktzuleitungen in den Behälterwänden verlegt werden. Bei Unterbruch einer dieser Leitungen fällt die Versorgungsspannung und/oder die Taktzuführung zu den Speichern aus, was zum Beispiel bei Verwendung von dynamischen Speichers automatisch zum Verlust der gespeicherten Information führt.

Ein weiterer wesentlicher Punkt des erfindungsgemässen Chiffriersystems ist, dass die jeweils ausgelesene Schlüsselinformation bzw. im Falle zweier Schlüssel die Grundschlüsselinformation sofort nach dem Auslesen gelöscht, also nur einmal verwendet wird. Dies erhöht nicht nur die kryptologische Sicherheit ganz beträchtlich, sondern erlaubt auch, den Schlüsselbehälter losgelöst vom eigentlichen Chiffrier/Dechiffriergerät unbewacht liegen zu lassen oder z.B. den gerade frisch aufgeladenen Schlüsselbehälter auf normalem Postwege zu verschicken, da ja die während dieser Zeit ausgegebenen Schlüsselinformationsteile nie gebraucht wurden und auch nie mehr gebraucht werden können, weil sie gelöscht sind.

Die vorstehend beschriebene Funktionsweise der Vorrichtung, bei der die Erneuerung der wirksamen Schlüsselinformation autonom vom Taktgeber des Schlüsselbehälters gesteuert wird (Schalter 134 in gezeigter Stellung), bildet den Normalbetriebsfall. Darüber hinaus bietet aber das erfindungsgemässe Chiffrier/Dechiffriersystem noch eine Anzahl weiterer Betriebsmöglichkeiten, welche im folgenden kurz beschrieben werden.

So ist es z.B. möglich, zwecks «Sparen» von Schlüsselinformation das Auslesen von Information während Übertragungspausen anzuhalten. Dazu muss nur der Schalter 134 mittels der Steuerbefehleingabe 9 via Taktumschalteingang $T_2$ in seine mittlere Stellung gebracht werden. Dies ist selbstverständlich nur bei an das Chiffriergerät angeschlossenem Schlüsselbehälter und für Befugte nach Freigabe durch die Identifikationsschaltung 150 möglich. Bei Wiederaufnahme der Verbindung muss dann dem Gesprächspartner die Anfangsadresse, bei der die neuerliche Auslesung beginnt (im Klartext) mitgeteilt werden und dieser muss gegebenenfalls die Adresszähler in den Speichersteuerungen mittels der Steuerbefehleingabe auf diese Anfangsadresse setzen.

Durch Umlegen des Schalters 134 in seine der gezeichneten Stellung gegenüberliegende Stellung werden die Speicherblöcke 111–116 direkt mit dem Nachrichtentakt $T_N$ ausgelesen, d.h., mit jedem Nachrichtenbit wird ein Schlüsselinformationsbit in den Chiffriergenerator transferiert. Dies läuft praktisch auf eine Direkt-Verschlüsselung der Nachricht mit der Schlüsselinformation nach Art der bekannten One-time-tape-Chiffrierung hinaus. Diese Betriebsweise verbraucht natürlich wesentlich mehr Schlüsselinformation, ermöglicht aber anderseits absolute Dechiffrierfestigkeit (sofern die Schlüsselinformation eine echte Zufallsinformation ist, was bisher vorausgesetzt wurde). Diese Betriebsweise kann z.B. zum Chiffrieren von Nachrichten höchster Geheimhaltungsstufe benützt werden. Für den One-time-tape-Betrieb kann auch ein eigener Schlüsselinformationsblock reserviert sein.

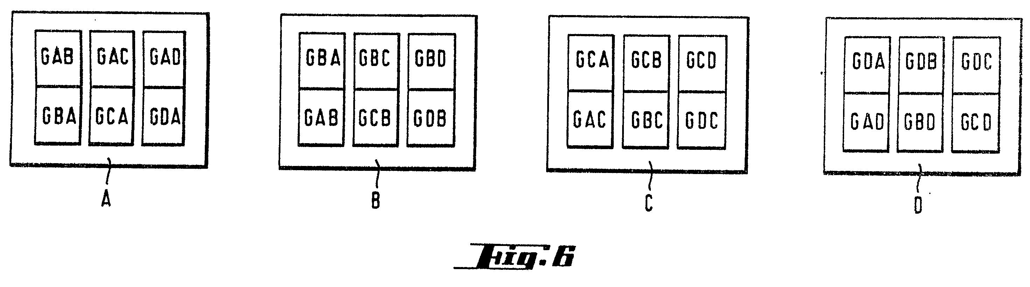

Das erfindungsgemässe Chiffriersystem ist aber auch für den Off-line-Betrieb geeignet, was im folgenden anhand der Fig. 6 näher erläutert wird, welche die Schlüsselorganisation für ein aus vier Teilnehmern A–D bestehendes System zeigt.

Der Einfachheit halber sei hier ein Einschlüsselsystem betrachtet. Die Schlüsselinformation jedes Teilnehmers umfasst für jede mögliche Verbindung für jede Verbindungsrichtung einen Schlüsselvorrat. Für die Verbindung von Teilnehmer A als Sender zu den Teilnehmern B–D sind dies die Vorräte GAB, GAC und GAD. Die Schlüsselvorräte für die umgekehrte Richtung sind mib GBA, GCA, GDA bezeichnet. Die Schlüsselvorräte bei den anderen Teilnehmern sind analog bezeichnet. Sende- und Empfängerschlüsselvorräte verschiedener Teilnehmer müssen natürlich paarweise übereinstimmen. Jeder Schlüsselvorrat ist in eine Anzahl von adressierbaren Blöcken aufgeteilt (in der Zeichnung nicht dargestellt).

Zu Beginn einer Nachrichtenübertragung wird der entsprechende Schlüsselvorrat und ein Block innerhalb desselben wie schon erläutert ausgewählt und die Adresse dieses Blocks dem Empfänger (im Klartext) mitgeteilt. Dieser kann dann aufgrund dieser Information des betreffenden Schlüsselblock auswählen und die empfangene Nachricht dechiffrieren. Pro Übertragung wird vorzugsweise ein separater Block verwendet. Selbstverständlich wird auch hier die Schlüsselinformation nur einmal verwendet.

Bei den vorstehend beschriebenen Systemen bildet der Chiffriergenerator die Chiffriersequenz in Abhängigkeit von einer mehr oder weniger grossen Anzahl von Schlüsselbits, welche Bitmenge als wirksame Schlüsselinformation bezeichnet wurde. Das Bildungsgesetz, nach welchem der Chiffriergenerator arbeitet, wird dabei nicht beeinflusst. Für besondere Fälle ist es selbstverständlich auch möglich, die Struktur des Chiffriergenerators von Zeit zu zeit zu ändern. Dies kann beispielsweise in Abhängigkeit von Datum und Uhrzeit zu beliebigen Zeitpunkten über das Jahr hinweg, und/oder vorzugsweise auch in Abhängigkeit von der momentanen Grundschlüsselinformation erfolgen. Im Prinzip bräuchte dazu nur eine Detektorstufe vorgesehen sein, die eine vorgegebene Sequenz von Schlüsselbits erkennen kann und dann die Struktur des Chiffriergenerators irgendwie umschaltet. Chiffriergeneratoren mit verstellbarer Struktur (Strukturschlüssel) sind, wie schon einleitend erwähnt, bekannt.

Der Chiffriergenerator kann intern mit sehr viel höherem Takt laufen, als dem Nachrichtentakt entspricht. Dadurch wird eine sehr grosse Anzahl von Verknüpfungen pro Zeiteinheit erhalten, was die kryptologische Sicherheit erhöht.

Die in den Schlüsselspeichern enthaltene Information kann, wie schon erwähnt, in adressierbare Datenblöcke aufgeteilt sein. Die Blöcke können eventuell mit selbstkorrigierenden Codes versehen sein, um eine möglichst hohe Störsicherheit zu erreichen.

Ferner ist es im Prinzip auch möglich, die gespeicherten Zusatzschlüssel durch die jeweiligen Momentan-Grundschlüssel zu modifizieren, um so zu einer Vielfalt von Zusatzschlüsseln zu gelangen.

Als Schlüsselspeicher kommen verschiedene Typen in Frage. Bevorzugt sind wegen ihrer grossen Speicherdichte sogenannte Magnetblasenspeicher (Magnetic Bubble Store) oder ladungsgekoppelte Speicher (CCD-Speicher). Ebenso kommen aber auch Tonband-Kassetten, Floppy Disks, Kernspeicher und dynamische RAM-Speicher in Frage. Insbesondere werden flüchtige Speicher bevorzugt, da diese bei Unterbruch der Speisespannung und/oder der Taktzufuhr automatisch die gespeicherte Information verlieren, was aus den schon erwähnten Sicherheitsgründen wünschenswert ist.

Jeder Teilnehmer eines Verbindungsnetzes ist vorzugsweise mit zwei (lleichen) Schlüsselbehältern ausgestattet, so dass während der z.B. alljährlichen Neuladung des Schlüsselspeichers der Nachrichtenverkehr aufrecht erhalten bleibt. Damit Netze einfach durch zusätzliche Teilnehmer erweitert werden können, ist es vorteilhaft, die Schlüsselbehälter gleich von Anfang an für eine grössere Teilnehmerzahl als vorerst vorgesehen zu konzipieren.

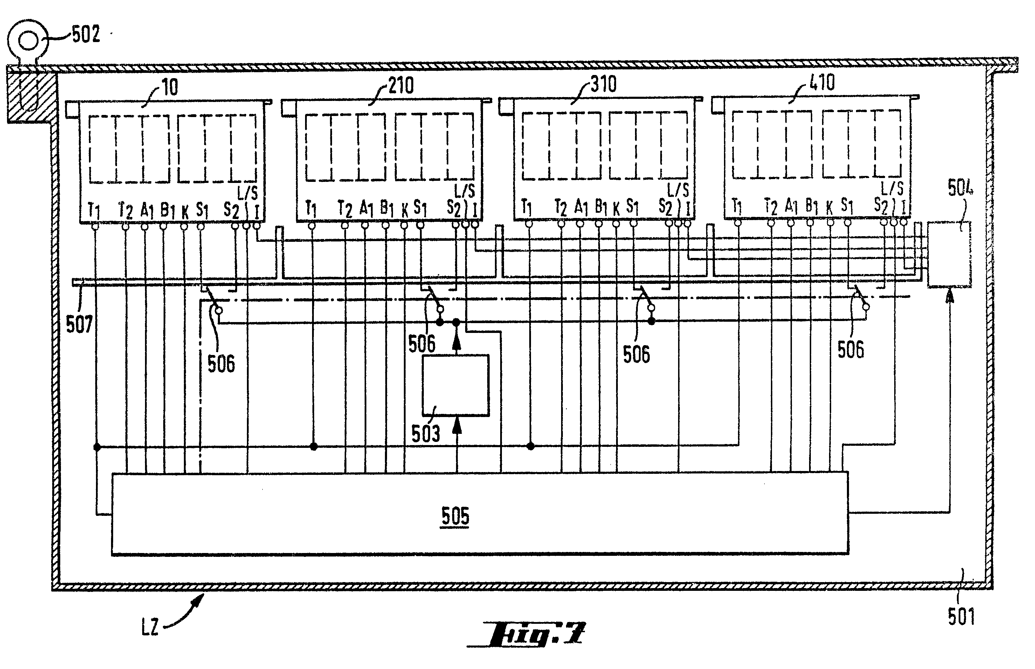

Die z.B. jährliche Neuladung der Schlüsselspeicher erfolgt in einer in Fig. 7 schematisch dargestellten Ladezentrale LZ. Diese enthält in einem für Unbefugte unzugänglichen, während des Betriebs völlig abgeschlossenen Raum 501, was durch den Schlüssel 502 symbolhaft angedeutet ist, einen Zufallsgenerator 503, eine Identifikationsgeberstufe 504, eine Schlüsselladesteuerung 505, Umschalter 506 und eine Steckverbindung 507 für die zu ladenden Schlüsselbehälter, hier im Beispiel deren vier mit den Bezugszeichen 10, 210, 310 und 410. Bei dem Zufallsgenerator handelt es sich um einen solchen, der eine echte Zufallsfolge erzeugt.

Wenn die zu ladenden Schlüsselbehälter an die Ladezentrale angeschlossen sind, findet zunächst eine Identifikation der einzelnen Behälter statt. Dazu gibt die Identifikationsgeberstufe 504 der Reihe nach die jedem Behälter zugeordnete Identifikationsinformation über den Eingang I in die Identifikationsstufe 151 des Behälters ein. Sofern die eingegebene Information mit der im Behälter gespeicherten Information übereinstimmt, wird einerseits der Zugang zum Schlüsselspeicher im Schlüsselbehälter wie schon beschrieben freigegeben und anderseits gleichzeitig eine neue Identifikationsinformation in die Identifikationsstufe 151 und in die Identifikationsgeberstufe 504 eingespeichert, welche Information die alte ersetzt und bis zur nächsten Ladung gilt. Diese Identifikationsinformation wird vom Zufallsgenerator 503 gebildet und via die Ladesteuerung 505 abgegeben.

Falls das Ergebnis der Identifikation negativ ausfällt, erscheint am K-Ausgang des betreffenden Behälters ein Alarm-Signal, das zur Blockierung des gesamten Ladevorgangs führt und einen Alarm od.dgl. auslöst.

Nachdem alle Schlüsselbehälter auf diese Weise identifiziert und mit neuer Identifikationsinformation geladen worden sind, schaltet die Lade-Steuerung 505 die internen Schlüsselspeicherungen der Schlüsselbehälter über deren Eingänge L/S auf Schreibbereitschaft und lädt dann sukzessive die einzelnen Speicherbereiche der Schlüsselspeicher mit der vom Zufallsgenerator 503 erzeugten Zufallsinformation. Zunächst werden beispielsweise die (hier drei) Speicherbereiche für Grundschlüsselinformation und dann nach Umlegen der Schalter 506 die Speicherbereiche für Zusatzschlüsselinformation geladen. Dabei erfolgt die Ladung selbstverständlich paarweise entsprechend den diversen Verbindungsmöglichkeiten der den Schlüsselbehältern zugeordnete Chiffrier/Dechiffrierstationen (siehe Fig. 4–6).

Die einzelnen Funktionsabläufe für die Ladung der Schlüsselbehälter sind trivial. Die praktische Realisierung der Ladesteuerung 505 erfolgt am besten mittels eines geeignet programmierten Mikro- oder Minicomputers.

Falls die Anzahl der Teilnehmer eines Netzes gross ist, kann es z.B. aus räumlichen Gründen möglich sein, dass nicht alle Schlüsselbehälter eines Netzes gleichzeitig in der Ladezentrale geladen werden können. In diesem Fall ist es natürlich auch möglich, die Ladung in mehreren Gruppen hintereinander vorzunehmen. Dabei müssen natürlich unter Umständen die an den einen Teil der Schlüsselbehälter bereits angegebenen Schlüsselinformationen vorübergehend gespeichert werden, um ein korrektes paarweises Laden der korrespondierenden Speicherbereiche zu gewährleisten.

Bei der z.B. jährlichen Neuladung der Schlüsselspeicher werden selbstverständlich gleichzeitig auch die Batterien der Schlüsselbehälter ausgewechselt bzw. wieder aufgeladen und allfällige Gangabweichungen der quarzgesteuerten Taktgeber ausgeglichen und gegebenenfalls weitere Kontrollen und Korrekturen vorgenommen.

Das automatische Laden der Schlüsselbehälter in einer nach aussen abgeschlossenen Ladezentrale hat den wichtigen Vorteil, dass die Schlüsselinformation absolut geheim bleibt, also nicht einmal Befugten bekannt ist. Damit sind diese Personen bezüglich der Schlüsselinformation auch nicht erpressbar.

Wie schon erläutert, erfolgt das periodische Erneuern der wirksamen Schlüsselinformation im Normalfall autonom uhrgesteuert, d.h. nach Massgabe des quarzgesteuerten Taktgebers im Schlüsselbehälter. Durch diese Massnahme werden nicht nur die schon beschriebenen kryptologischen Vorteile, sondern gleichzeitig auch eine wesentliche Vereinfachung der bei Chiffriersystemen im allgemeinen recht schwierigen Synchronisierung erreicht. Die Synchronisierung kann sich beim erfindungsgemässen System auf die Korrektur der relativen Uhrabweichung (z.B. etwa 100 msec pro Tag) sowie die Korrektur der Übertragungslaufzeiten (z.B. 20 msec) beschränken.

Jeder Teilnehmer eines Netzes kann einen individuellen und nur einmalig vorkommenden Schlüsselsatz besitzen, welcher ihm die Verbindung mit allen übrigen Teilnehmern gestattet, wobei aber bei Kenntnis des einen Teilnehmerschlüsselsatzes durch Unbefugte nur die Verbindungen dieses einen Teilnehmers verraten und alle übrigen Verbindungen nicht tangiert sind.

Das erfindungsgemässe System ist sehr einfach vom erläuterten Normalbetrieb auf One-time-tape-Betrieb oder auf Off-Line-Betrieb umstellbar.

Die einzige organisatorische Massnahme, die beim erfindungsgemässen System notwendig ist, beschränkt sich auf das periodische Einsenden der Teilnehmer-Schlüsselbehälter an die Ladezentrale, wo die Neuladung und Regeneration der Schlüsselbehälter in wenigen Minuten und praktisch völlig automatisch erfolgt. Ein besonderer Vorteil ist dabei, dass die Schlüsselbehälter wegen der taktgesteuerten Schlüsselauslesung und der automatischen Löschung der ausgelesenen Information ohne besondere Sicherheitsmassnahmen transportiert werden können.

## Patentansprüche

1. Vorrichtung zur chiffrierten Übermittlung von Nachrichten mit einem sendeseitigen Chiffrierteil und einem empfangsseitigen Dechiffrierteil, welche beiden Teile je einen Schlüsselspeicher (110), einen Chiffriergenerator (3), einen Mischer (4) und eine Synchronisationsstufe (5) aufweisen, wobei die Chiffriergeneratoren (3) je eine sende- und empfangsseitig identische, jeweils von einem Teil der in den zugehörigen Schlüsselspeichern (110) gespeicherten Schlüsselinformation abhängige Chiffriersequenz erzeugen, welche der sendeseitige Mischer (4) mit den Klarnachrichten zum Chiffrat mischt und der empfangsseitige Mischer (4) mit dem Chiffrat zum ursprünglichen Klartext zurückmischt, und wobei die Synchronisationsstufe (5) z.B. mittels gesteuerter Verzögerungsglieder (6, 7) den Synchronismus zwischen dem sende- und dem empfangsseitigen Chiffriergenerator (3) und den mit diesen zusammenarbeitenden Stufen erstellt, dadurch gekennzeichnet,

- dass sende- und empfangsseitige Mittel (120, 130–134) vorgesehen sind, welche die in den Chiffriergeneratoren (3) wirksame Schlüsselinformation durch block- oder bitweises Auslesen von jeweils neuer Information aus den Schlüsselspeichern (110) zu vorgegebenen Zeitpunkten bzw. in vorgegebenen zeitlichen Abständen laufend erneuern, wobei die Schlüsselspeicher (110) einen für einen längeren Zeitraum, z.B. etwa 1 Jahr, ausreichenden Schlüsselinformationsvorrat enthalten,

- dass die Schlüsselspeicher (110) in separaten, abgeschlossenen Schlüsselbehältern (10) angeordnet sind, die mit dem Chiffrier- bzw. dem Dechiffrierteil lösbar verbunden sind,

- und dass die Schlüsselbehälter (10) mit einer von ausserhalb der Behälter (10) nicht beeinflussbaren Zeitfensterschaltung (120, 130–134) versehen sind, welche ein Auslesen von Information aus den Schlüsselspeichern (110) ausserhalb der vorgegebenen Zeitpunkte bzw. zeitlichen Abstände verhindert.

2. Vorrichtung nach Anspruch 1, dadurch gekennzeichnet, dass die Schlüsselbehälter (10) Mittel (120) aufweisen, welche zumindest einen Teil der jeweils ausgelesenen Schlüsselinformation unmittelbar nach der Auslesung löschen.

3. Vorrichtung nach Anspruch 1 oder 2, dadurch gekennzeichnet, dass die Schlüsselbehälter (10) einen Eingang (I) für Identifikationsinformation und eine Identifikationsstufe (150) enthalten, welche nur nach Eingabe einer vorbestimmten Identifikationsinformation den Zugang zum Schlüsselspeicher (110) freigibt.

4. Vorrichtung nach einem der vorangehenden Ansprüche, dadurch gekennzeichnet, dass im Schlüsselspeicher (110) Grundschlüsselinformation und Zusatzschlüsselinformation gespeichert ist, wobei der Zusatzschlüsselinformationsvorrat geringer ist als der Grundschlüsselvorrat, dass im Schlüsselbehälter Mittel (120, 133) vorhanden sind, welche bewirken, dass die Zusatzschlüsselinformation block- oder bitweise in kürzeren Zeitabständen als die Grundschlüsselinformation und nach Erschöpfung des Vorrats jeweils wieder von neuem ausgelesen wird, und dass im Schlüsselbehälter (10) ferner Mittel (140) zur Mischung der ausgelesenen Grundschlüssel- und Zusatzschlüsselinformation vorgesehen sind.

5. Vorrichtung nach einem der vorangehenden Ansprüche, dadurch gekennzeichnet, dass die Zeitfensterschaltung einen vorzugsweise quarzgesteuerten Taktgenerator (130) enthält, welcher die Zeitpunkte der Speicherauslesung bestimmt.

6. Vorrichtung nach einem der vorangehenden Ansprüche, dadurch gekennzeichnet, dass die Auslesung des Schlüsselspeichers (110) bitweise erfolgt.

7. Vorrichtung nach einem der vorangehenden Ansprüche, dadurch gekennzeichnet, dass die Auslesung der Grundschlüsselinformation in kleineren Blöcken, vorzugsweise bitweise und die der Zusatzschlüsselinformation in grösseren Blöcken erfolgt.

8. Vorrichtung nach einem der vorangehenden Ansprüche, dadurch gekennzeichnet, dass die Auslesung der Zusatzschlüsselinformation in kleineren Blöcken oder bitweise erfolgt.

9. Vorrichtung nach einem der vorangehenden Ansprüche, dadurch gekennzeichnet, dass der Schlüsselspeicher (110) mehrere durch ausserhalb des Schlüsselbehälters befindliche Umschaltmittel (9) selektiv ansteuerbare Speicherbereiche (111–116) mit Grund- und/oder Zusatzschlüsselinformation umfasst.

10. Vorrichtung nach Anspruch 9, dadurch gekennzeichnet, dass der Schlüsselspeicher (110) für jede Sender-Empfänger-Verbindung einen eigenen Grundschlüsselinformationsspeicherbereich (111–113) enthält.

11. Vorrichtung nach Anspruch 9, dadurch gekennzeichnet, dass der Schlüsselspeicher (110) für jede Sender-Empfänger-Verbindung einen gemeinsamen Grundschlüsselinformations-Speicherbereich und einen eigenen Zusatzschlüsselinformations-Speicherbereich (114–116) enthält.

12. Vorrichtung nach Anspruch 9, dadurch gekennzeichnet, dass der Schlüsselspeicher (110) für jede Sender-Empfänger-Verbindung je einen eigenen Grundschlüsselinformations- (111–113) und einen eigenen Zusatzschlüsselinformations-Speicherbereich (114–116) umfasst.

13. Vorrichtung nach Anspruch 3 und einem der Ansprüche 9–12, dadurch gekennzeichnet, dass die Ansteuerung der einzelnen Speicherbereiche (111–116) durch die Identifikationsstufe (150) blockierbar ist.

14. Vorrichtung nach einem der voranstehenden Ansprüche, dadurch gekennzeichnet, dass die einzelnen Speicherzellen des Schlüsselspeichers (110) durch ausserhalb des Schlüsselbehälters (10) befindliche Mittel (9) selektiv addressierbar sind.

15. Vorrichtung nach Ansprüchen 3 und 14, dadurch gekennzeichnet, dass die Adressierung der Speicherzellen durch die Identifikationsstufe (150) blockierbar ist.

16. Vorrichtung nach Anspruch 5, dadurch gekennzeichnet, dass der Taktgenerator (130) von ausserhalb des Schlüsselbehälters nicht beeinflussbar ist.

17. Vorrichtung nach Anspruch 5, dadurch gekennzeichnet, dass die wirksame Taktfrequenz des Taktgenerators (130–133) durch ausserhalb des Schlüsselbehälters befindliche Mittel (9) erhöhbar ist, wobei die Frequenzumschaltung durch die Identifikationsstufe (150) blockierbar ist.

19. Vorrichtung nach einem der vorangehenden Ansprüche, dadurch gekennzeichnet, dass die Grund- und Zusatzschlüsselinformationen Zufallsinformationen sind.

19. Vorrichtung nach einem der vorangehenden Ansprüche, dadurch gekennzeichnet, dass die Erneuerung der Schlüsselinformation abschaltbar ist.

20. Vorrichtung nach einem der vorangehenden Ansprüche, dadurch gekennzeichnet, dass eine Ladeeinrichtung (LZ) vorgesehen ist, welche die Schlüsselbehälter (10) wenigstens einen Teils der zu einem Verbindungsnetz gehörenden Sende- bzw. Empfangsteile gleichzeitig aufnimmt und die Schlüsselspeicher (110) bzw. -bereiche von jeweils zu einer Sender-Empfänger-Verbindung bestimmten Schlüsselbehältern automatisch paarweise mit jeweils derselben Zufallsinformation lädt.

21. Vorrichtung nach Ansprüchen 3 und 20, dadurch gekennzeichnet, dass die Ladeeinrichtung (LZ) einen Identifikationsspeicher (504) mit den einzelnen Schlüsselbehältern (10) zugeordneten, vorgegebenen Identifikationsinformationen enthält und dass Mittel (150) vorhanden sind, welche die Ladung der Schlüsselspeicher (110) blockieren, wenn die im Identifikationsspeicher (504) gespeicherten Identifikationsinformation nicht mit den den Schlüsselbehältern (10) zugeordneten Identifikationsinformationen übereinstimmen.

22. Vorrichtung nach Anspruch 20, dadurch gekennzeichnet, dass die Ladeeinrichtung (LZ) während des Ladevorgangs ein abgeschlossenes, von aussen nicht zugängliches System bildet.

23. Vorrichtung nach einem der vorangehenden Ansprüche, dadurch gekennzeichnet, dass die Schlüsselbehälter (10) mit Mitteln versehen sind, welche bei einem unbefugten Eingriff die im Schlüsselspeicher enthaltene Information löschen.

24. Vorrichtung nach einem der voranstehenden Ansprüche, dadurch gekennzeichnet, dass die Erneuerung der im Chiffriergenerator (3) wirksamen Schlüsselinformation derart erfolgt, dass im Durchschnitt bei jeder neuen Nachrichtenübermittlung ein vollständiger Wechsel der wirksamen Schlüsselinformation stattgefunden hat.

25. Vorrichtung nach einem der voranstehenden Ansprüche, dadurch gekennzeichnet, dass der Schlüsselspeicher (10) eine solche Speicherkapazität hat, dass er für mindestens etwa 500 bis 1000 vollständige Wechsel ausreichende Schlüsselinformation aufnehmen kann.

26. Vorrichtung nach Anspruch 25, dadurch gekennzeichnet, dass der Schlüsselspeicher (10) eine Speicherkapazität von mindestens etwa 100 Kbit aufweist.

27. Vorrichtung nach einem der vorangehenden Ansprüche, dadurch gekennzeichnet, dass Mittel vorhanden sind, welche die Struktur des Chiffriergenerators (3) vorzugsweise in Abhängigkeit von der Schlüsselinformation umschalten.

**Claims**

1. Apparatus for the coded transmission of information, comprising a coding section at the transmission end and a decoding section at the receiving end, the two sections each comprising a key store (110), a code generator (3), a mixer (4) and a synchronization stage (5), the code generators each generating a code sequence, the said sequences being identical at the transmission and receiving ends and being each dependent upon part of the key information stored in the associated key stores (110), the mixer (4) at the transmission end mixing said code sequence with the clear information to form the coded message while the mixer (4) at the receiving end mixes said sequence with the coded message to form the original clear text, the synchronization stage (5) providing synchronism between the code generators (3) at the transmission and receiving ends and the stages co-operating therewith, synchronization being provided, for example, by controlled delay networks (6, 7), characterised

– in that means (120, 130–134) are provided at the transmission and receiving ends, said means continually renewing the key information operative in the code generators (3) by block-wise or bit-wise read-out of new information from the key stores (110) at predetermined times and/or at predetermined intervals of time, the key stores (110) containing a key information supply adequate for a relatively long period, e.g. approximately one year,

– in that the key stores (110) are disposed in separate, closed key containers (10) detachably connected to the coding and decoding sections,

– and in that the key containers (10) are provided with a time window circuit (120, 130–134) which cannot be influenced from outside the containers (10) and which prevents the read-out of information from the key stores (110) outside the predetermined times or intervals of time.

2. Apparatus according to Claim 1, characterised in that the key containers (10) comprise means (120) which erase at least part of the read-out key information immediately after the read-out.

3. Apparatus according to Claim 1 or 2, characterised in that the key containers (10) have an input (I) for identification information and an identification stage (150) which releases access to the key store (110) only after the inputting of predetermined identification information.

4. Apparatus according to one of the preceding Claims, characterised in that basic key information and supplementary key information are stored in the key store (110) the supplementary key information supply being less than the basic key supply, in that the key container contains means (120, 133) which cause the supplementary key information to be read out afresh block-wise or bit-wise at shorter intervals of time than the basic key information and after exhaustion of the supply, and in that the key container (10) also contains means (140) for mixing the read-out basic key information and supplementary key information.

5. Apparatus according to one of the preceding claims, characterised in that the time window circuit contains a preferably quartz-controlled clock generator (130) which determines the times of the store read-out.

6. Apparatus according to one of the preceding Claims, characterised in that the read-out of the key store (110) is effected bit-wise.

7. Apparatus according to one of the preceding Claims, characterised in that the read-out of the basic key information is effected in relatively smaller blocks, preferably bit-wise, and the read-out of the supplementary key information is effected in relatively larger blocks.

8. Apparatus according to one of the preceding Claims, characterised in that the read-out of the supplementary key information is effected in relatively small blocks or bit-wise.

9. Apparatus according to one of the preceding Claims, characterised in that the key store (110) includes a plurality of storage zones (111–116) containing basic and/or supplementary key information, said zones being selectively controllable by selection means (9) situated outside the key container.

10. Apparatus according to Claim 9, characterised in that the key store (110) contains a separate basic key information storage zone (111–113) for each transmitter-receiver connection.

11. Apparatus according to Claim 9, characterised in that the key store (110) contains a common basic key information storage zone and a separate supplementary key information storage zone (114–116) for each transmitter-receiver connection.

12. Apparatus according to Claim 9, characterised in that the key store (110) comprises a separate basic key information zone (111–113) and a separate supplementary key information storage zone (114–116) for each transmitter-receiver connection.

13. Apparatus according to Claim 3 and one of Claims 9 to 12, characterised in that the control of the individual storage zones (111–116) is blockable by the identification stage (150).

14. Apparatus according to one of the preceding Claims, characterised in that the individual storage cells of the key store (110) are selectively addressable by means (9) situated outside the key container (10).

15. Apparatus according to Claims 3 and 14, characterised in that the addressing of the storage cells is blockable by means of the identification stage (150).

16. Apparatus according to Claim 5, characterised in that the clock generator (130) cannot be influenced from outside the key container.

17. Apparatus according to Claim 5, characterised in that the operative clock frequency of the clock generator (130–133) is adapted to be raised by means (9) situated outside the key container, the frequency change-over being blockable by means of the identification stage (150).

18. Apparatus according to one of the preceding Claims, characterised in that the basic supplementary key information is random information.

19. Apparatus according to one of the preceding Claims, characterised in that the renewal of the key information is adapted to be switched off.

20. Apparatus according to one of the preceding Claims, characterised in that a loading device (LZ) is provided, which simultaneously accomodates the key containers (10) of at least part of the transmission and receiving sections associated with a connection network and automatically loads in pairs, with the same random information in each case, the key stores (110) or zones of key containers each intended for a transmitter-receiver connection.

21. Apparatus according to Claims 3 and 20, characterised in that the loading device (LZ) comprises an identification store (504) having predetermined identification information associated with the individual key containers (10) and in that means (150) are provided which block the loading of the key store (110) when the identification information stored in the identification store (504) is not identical to the identification information associated with the key containers (10).

22. Apparatus according to Claim 20, characterised in that during the loading operation the loading device (LZ) forms a closed system not accessible from outside.

23. Apparatus according to one of the preceding Claims, characterised in that the key containers (10) have means which erase the information contained in the key store in the event of unauthorized operation.

24. Apparatus according to one of the preceding Claims, characterised in that the renewal of the key information operative in the code generator (3) is so effected that on average a complete change of the operative key information has taken place on each new information transmission.

25. Apparatus according to one of the preceding Claims, characterised in that the key store (10) has such a storage capacity that it can accomodate key information sufficient for at least some 500 to 1000 complete changes.

26. Apparatus according to Claim 25, characterised in that the key store (10) has a storage capacity of at least approximately 100 Kbits.

27. Apparatus according to one of the preceding Claims, characterised in that means are provided to change over the structure of the code generator (3), preferably in dependence upon the key information.

**Revendications**

1. Dispositif de transmission de données, avec une partie de codage située du côté de l'émission et une partie de décodage située du côté de la réception, ces deux parties comportant chacune une mémoire de codes (110), un générateur de codes (3), un mélangeur (4) et un étage de synchronisation (5), les générateurs de codes (3) engendrant chacun une séquence de codage qui est identique du côté émission et du côté réception et qui dépend à chaque fois d'une partie de l'information de code emmagasinée dans les mémoires de codes (110) associées, que le mélangeur (4) situé côté émission mélange avec les données en clair pour obtenir la donnée codée et que le mélangeur (4) situé côté réception mélange de nouveau avec la donnée chiffrée pour obtenir le texte initial en clair, l'étage de synchronisation (5) établissant, par exemple au moyen d'organes commandés de temporisation (6, 7), le synchronisme entre le générateur de codes (3) situé côté émission et le générateur de codes situé côté réception et les étages coopérant avec ces générateurs, dispositif caractérisé par le fait qu'il est prévu des moyens (120, 130–134) situés côté émission et côté réception, qui renouvellent en permanence, à des périodes prédéterminées ou par intervalles de temps pré-déterminés, l'information de code efficace dans les générateurs de codes (3) par une lecture bloc par bloc ou bit par bit d'une nouvelle information respective provenant des mémoires de codes (110), les mémoires de codes (110) renfermant un stock d'informations de code suffisant pour une longue période, par exemple d'environ une année; par le fait que les mémoires de codes (110) sont disposées dans des banques de codes (10) fermées et individuelles qui sont reliées de manière amovible à la partie de codage ou à la partie de décodage; et par le fait que les banques de codes (10) sont munies d'un circuit de fréquence temporelle (120, 130–134) qui, non influençable à partir de l'extérieur de banques (10), empêche une lecture d'information provenant des mémoires de codes (110) en dehors des périodes ou intervalles de temps prédéterminés.

2. Dispositif selon la revendication 1, caractérisé par le fait que les banques de codes (10) présentent des moyens (120) qui effacent au moins une partie de l'information de code lue à chaque fois, immédiatement après cette lecture.

3. Dispositif selon la revendication 1 ou 2, caractérisé par le fait que les banques de codes (10) comportent une entrée (I) pour l'information d'identification et un étage identificateur (150) qui libère l'accès à la mémoire de codes (110) seulement après l'entrée d'une information d'identification prédéterminée.

4. Dispositif selon l'une des revendications précédentes, caractérisé par le fait qu'une information de codes de base et une information de codes additionnels est mémorisée dans la mémoire de codes (110), le stock d'information de codes additionnels étant plus petit que le stock de codes de base; par le fait que, dans la banque de codes, sont prévus des moyens (120, 133) qui font en sorte que l'information de codes additionnels soit lue de nouveau bloc par bloc ou bit par bit à des intervalles de temps plus courts que pour l'information de codes de base et après l'èpuisement du stock, respectivement; et par le fait que, dans la banque de codes (10), sont en outre prévus des moyens (140) pour mélanger les informations de codes de base et de codes additionnels lues.

5. Dispositif selon l'une des revendications précédentes, caractérisé par le fait que le circuit de séquence temporelle renferme un générateur d'impulsions (130) de préférence commandé par quartz et déterminant les instants de lecture de la mémoire.

6. Dispositif selon l'une des revendications précédentes, caractérisé par le fait que la lecture de la mémoire de codes (110) a lieu bit par bit.

7. Dispositif selon l'une des revendications précédentes, caractérisé par le fait que la lecture de l'information de codes de base a lieu dans des blocs plus petits, de préférence bit par bit, celle de l'information de codes additionnels ayant lieu dans des blocs plus grands.

8. Dispositif selon l'une des revendications précédentes, caractérisé par le fait que la lecture de l'information de codes additionnels a lieu dans de petits blocs ou bit par bit.

9. Dispositif selon l'une des revendications précédentes, caractérisé par le fait que la mémoire de codes (110) renferme plusieurs zones de mémorisation (111–116) avec une information de codes de base et/ou de codes additionnels, qui peuvent être commandées sélectivement par des moyens de commutation (9) situés à l'extérieur de la banque de codes.

10. Dispositif selon la revendication 9, caractérisé par le fait que la mémoire de codes (110) renferme une zone individuelle (111–113) de mémorisation d'information de codes de base pour chaque liaison émetteur-récepteur.

11. Dispositif selon la revendication 9, caractérisé par le fait que, pour chaque liaison émetteur-récepteur la mémoire de codes (110) renferme une zone commune de mémorisation d'information de codes de base et une zone propre (114–116) de mémorisation d'information de codes additionnels.

12. Dispositif selon la revendication 9, caractérisé par le fait que, pour chaque liaison émetteur-récepteur, la mémoire de codes (110) renferme à chaque fois une zone individuelle (111–113) de mémorisation d'information de codes de base et une zone individuelle (114–116) de mémorisation d'information de codes additionnels.

13. Dispositif selon la revendication 3 et l'une des revendications 9 à 12, caractérisé par le fait que la commande des zones individuelles de mémorisation (111–116) peut être bloquée par l'étage d'identification (150).

14. Dispositif selon l'une des revendications précédentes, caractérisé par le fait que les cellules individuelles de mémorisation de la mémoire de codes (110) sont adressables sélectivement par des moyens (9) situés à l'extérieur de la banque de codes (10).

15. Dispositif selon les revendications 3 et 14, caractérisé par le fait que l'adressage des cellules de mémorisation peut être bloqué par l'étage d'identification (150).

16. Dispositif selon la revendication 5, caractérisé par le fait que le générateur d'impulsions (130) n'est pas influençable à partir de l'extérieur de la banque de codes.

17. Dispositif selon la revendication 5, caractérisé par le fait que la fréquence d'impulsions efficace du générateur de fréquences (130–133) peut être augmentée par des moyens (9) situés à l'extérieur de la banque de codes, la commutation de fréquence pouvant être bloquée par l'étage d'identification (150).

18. Dispositif selon l'une des revendications précédentes, caractérisé par le fait que les informations de codes de base et de codes additionnels sont des informations aléatoires.

19. Dispositif selon l'une des revendications précédentes, caractérisé par le fait que le renouvellement de l'information de code peut être déclenché.

20. Dispositif selon l'une des revendications précédentes, caractérisé par le fait qu'il est prévu un dispositif de chargement (LZ) qui reçoit simultanément les banques de codes (10) d'au moins une part des parties de réception et d'émission appartenant à un réseau de liaison, et qui charge automatiquement et par paires, avec à chaque fois la même information aléatoire, les mémoires (110), ou zones de mémorisation de codes, de banques de codes respectivement destinées à une liaison émetteur-récepteur.

21. Dispositif selon les revendications 3 et 20, caractérisé par le fait que le dispositif de chargement (LZ) renferme une mémoire d'identification (504) avec des informations d'identification prévues associées aux banques individuelles de codes (10); et par le fait que sont prévus des moyens (150) qui bloquent le chargement des mémoires de codes (110) lorsque l'information d'identification accumulée dans la mémoire d'identification (504) ne coïncide pas avec les informations d'identification associées aux banques de codes (10).

22. Dispositif selon la revendication 20, caractérisé par le fait que le dispositif de chargement (LZ) forme, lors du processus de chargement, un système fermé non accessible de l'extérieur.

23. Dispositif selon l'une des revendications précédentes, caractérisé par le fait que les banques de codes (10) sont pourvues de moyens qui, en cas d'intervention non autorisée, effacent l'information contenue dans la mémoire de codes.

24. Dispositif selon l'une des revendications précédentes, caractérisé par le fait que le renouvellement de l'information de code efficace dans le générateur de codes (3) a lieu de telle sorte que, en moyenne, pour chaque nouvelle transmission de données, un remplacement intégral de l'information de code efficace ait eu lieu.

25. Dispositif selon l'une des revendications précédentes, caractérisé par le fait que la banque de codes (10) présente une capacité de mémorisation telle qu'elle puisse recevoir une information de code suffisante pour au moins d'environ 500 à 1000 remplacements intégraux.

26. Dispositif selon la revendication 25, caractérisé par le fait que la banque de codes (10) présente une capacité de mémorisation d'au moins environ 100 Kbits.

27. Dispositif selon l'une des revendications précédentes, caractérisé par le fait que sont prévus des moyens qui modifient ou commutent la structure du générateur de codes (3) de préférence en fonction de l'information de code.

**Fig.1**

0 022 069

0 022 069

*Fig.2*

Fig. 3

**Fig. 4**

*Fig. 5a*

*Fig. 5b*

Fig. 6

**Fig.7**

0 022 069